# EUROPEAN PATENT APPLICATION

(11) **EP 4 845 184 A1**
(43) Date of publication of application: **25.11.2026**
(21) Application number: 24921541.9
(22) Date of filing: 23.10.2024
(51) Int. Cl.: H04W 4/021, H04W 4/029

(54) **POSITIONING METHOD AND RELATED DEVICE**

(30) Priority: 31.01.2024 CN 202410144744
(71) Applicant: Huawei Technologies Co., Ltd., Shenzhen, Guangdong 518129 (CN)
(72) Inventor: WEI, Kangming, Shenzhen, Guangdong 518129 (CN); HE, Chunyong, Shenzhen, Guangdong 518129 (CN); JIN, Yufeng, Shenzhen, Guangdong 518129 (CN); JIN, Lanhai, Shenzhen, Guangdong 518129 (CN)
(74) Representative: Huawei European IPR
(86) International application number: PCT/CN2024/126672
(87) International publication number: WO 2025/161517

(57) **Abstract**

A positioning method and a related device are provided, to implement low-power positioning and increase a battery life. For example, a first device determines whether a first condition is satisfied, where the first condition includes at least one of the following: a current battery level is less than a first preset battery level, a current load is greater than a first preset load, current time is within a first preset period of time, and it is detected, through a positioning system in the first device, that the first device enters a first geo-fence; and if it is determined that the first device satisfies the first condition, a positioning mode of the first device is switched from a first mode to a second mode, where the first mode is positioning through the positioning system, and the second mode is positioning through a short-range communication module in the first device. Because positioning power consumption in the second mode is low, a power drain speed of the first device can be reduced, and a battery life of the first device can be increased.

## Description

### CROSS-REFERENCE TO RELATED APPLICATIONS

This application claims priority to Chinese Patent Application No. 202410144744.4, filed with the China National Intellectual Property Administration on January 31, 2024 and entitled "POSITIONING METHOD AND RELATED DEVICE", which is incorporated herein by reference in its entirety.

### TECHNICAL FIELD

This application relates to the field of terminal technologies, and in particular, to a positioning method and a related device.

### BACKGROUND

For vulnerable groups such as kids and the elderly, due to their weak safety awareness and self-protection capabilities, safety accidents are prone to occur. For example, a phenomenon of the loss of kids or the elderly when going out occurs frequently in society. Therefore, safety of the vulnerable groups such as kids or the elderly is an issue of great concern in current society.

### SUMMARY

Embodiments of this application provide a positioning method and a related device, to implement low-power positioning and increase a battery life.

According to a first aspect, a positioning method is provided, and is applied to a first device. The first device may be, for example, a watch, for example, a watch of a kid. The first device includes a short-range communication module. The method includes: determining whether a first device satisfies a first condition, where the first condition includes at least one of the following: a current battery level is less than a first preset battery level, a current load is greater than a first preset load, current time is within a first preset period of time, and it is detected, through a positioning system in the first device, that the first device enters a first geo-fence; and switching, if it is determined that the first device satisfies the first condition, a positioning mode of the first device from a first mode to a second mode, where the first mode is positioning through the positioning system, and the second mode is positioning through the short-range communication module.

In embodiments of this application, for example, the first device is a kids' watch. The kids' watch includes two positioning modes: the first mode and the second mode. The first mode is positioning through the positioning system (for example, a GPS or a GNSS). The second mode is positioning through the short-range communication module. When the first condition is satisfied, the kids' watch switches from the first mode to the second mode. The second mode consumes low power, and can reduce a power drain speed of the kids' watch and increase a battery life.

In a possible design, the positioning through the short-range communication module includes: sending a positioning request to a surrounding device through the short-range communication module, where the positioning request is used to trigger the surrounding device to report a geographical position to a cloud, and the positioning request includes a device identifier of the first device.

In embodiments of this application, the kids' watch may trigger, through the short-range communication module, the surrounding device to report the geographical position to the cloud. Therefore, the kids' watch side does not need to perform positioning through a local positioning system (for example, the GPS), and does not need to perform long-range communication with the cloud, so that power consumption is low, and a battery life is improved.

In a possible design, the positioning through the short-range communication module includes: sending a positioning request to a surrounding device through the short-range communication module, where the positioning request is used to trigger the surrounding device to send a geographical position to the first device; and sending a second geographical position to a cloud based on a first geographical position sent by the surrounding device.

In embodiments of this application, the kids' watch may obtain the geographical position from the surrounding device through the short-range communication module. Therefore, the kids' watch side may determine the geographical position without using the local positioning system (for example, the GPS), so that power consumption is low, and a battery life is improved.

In a possible design, the first geographical position is the same as the second geographical position, and is a geographical position of the first device; or the first geographical position is a geographical position of the surrounding device, and the second geographical position is a geographical position of the first device that is obtained through calculation based on the first geographical position.

In embodiments of this application, the kids' watch may obtain the first geographical position from the surrounding device through the short-range communication module, and then send the second geographical position to the cloud. In one case, the first geographical position is the same as the second geographical position, and is used as the geographical position of the first device. In another case, the first geographical position is the geographical position of the surrounding device (for example, a geographical position detected by a GPS of the surrounding device), and the second geographical position is the geographical position of the first device obtained through calculation based on the first geographical position. In this way, the kids' watch side may determine the geographical position without using the local positioning system (for example, the GPS), so that power consumption is low, and an obtained geographical position is a geographical position of the first device obtained through calculation, which is accurate.

In a possible design, after it is detected, through the positioning system, that the first device enters the first geo-fence, the method further includes: disabling the positioning system.

In embodiments of this application, after it is detected, through the positioning system (for example, the GPS or the GNSS), that the kids' watch enters the first geo-fence, the kids' watch may switch to the second mode. In this case, the kids' watch may disable the positioning system, to avoid a waste of power consumption.

In a possible design, the method further includes: switching, when it is determined that the first device satisfies a second condition, the positioning mode from the second mode to the first mode, where the second condition includes at least one of the following:
the current battery level is greater than or equal to the first preset battery level;
the current load is less than or equal to the first preset load;
the current time is not within the first preset period of time; or
it is determined, through the second mode, that the first device moves out of the first geo-fence.

In embodiments of this application, when the second condition is satisfied, the kids' watch switches back from the second mode to the first mode. Because the first mode is positioning through the positioning system, which is accurate, positioning accuracy is improved.

In a possible design, the method further includes: enabling a positioning function when it is determined that the first device satisfies a third condition, where the third condition includes at least one of the following:
a guardian device of the first device is not contacted for more than first preset duration;
the first device is not used for more than second preset duration; or
the current time is within a second preset period of time.

Optionally, the guardian device of the first device may be understood as a device of a guardian of a user corresponding to the first device. For example, the user corresponding to the first device is a kid, and the guardian is a parent. In this case, the guardian device of the first device is a mobile phone of the parent.

In embodiments of this application, the positioning function in the kids' watch does not need to be always enabled. When the third condition is satisfied, the positioning function may be automatically enabled, to avoid a waste of power caused by the positioning function being enabled for a long time.

In a possible design, the method further includes: receiving, through the short-range communication module, reminder information sent by the surrounding device, where the reminder information comes from the cloud or a guardian device of the first device.

In embodiments of this application, the kids' watch may receive, through a surrounding device, a reminder message sent by a parent, to avoid the loss of kids as much as possible.

In a possible design, before the sending the positioning request to the surrounding device through the short-range communication module, the method further includes: determining, when it is determined that a plurality of surrounding devices exist, a target device in the plurality of surrounding devices based on device distances and/or device types of the surrounding device; and the sending the positioning request to the surrounding device through the short-range communication module includes: sending the positioning request to the target device through the short-range communication module.

In embodiments of this application, the kids' watch may determine a target device from the plurality of surrounding devices, and then perform positioning with assistance of the target device. In this way, the kids' watch may select a surrounding device with high safety as much as possible, for example, may select a surrounding smart bus stop sign or a road side unit, to improve safety.

In a possible design, before the sending the positioning request to the surrounding device through the short-range communication module, the method further includes: outputting prompt information when it is determined that no surrounding device exists, where the prompt information is used to prompt the first device to move.

In embodiments of this application, when determining that no surrounding device exists, the kids' watch may prompt the kid to move, to find the surrounding device as much as possible to assist the kids' watch in positioning, thereby ensuring kid safety.

In a possible design, the positioning system includes a global positioning system GPS or a global navigation satellite system GNSS; and the short-range communication module includes Bluetooth, Bluetooth low energy BLE, near field communication NFC, or ultra-wideband UWB.

It should be noted that, in this specification, an example in which the positioning system includes the GPS or the GNSS is used. Certainly, another positioning manner may be further included. In addition, in this specification, an example in which the short-range communication module includes Bluetooth, BLE, NFC, and UWB is used. Certainly, another short-range communication manner may be further included. This is not limited in embodiments of this application.

In a possible design, before the sending the positioning request to the surrounding device through the short-range communication module, the method further includes: the first device is powered off or enters an airplane mode.

In embodiments of this application, when the kids' watch is in an offline state, positioning may also be performed, to avoid a situation in which a position of the kids' watch cannot be found in the offline state.

According to a second aspect, a positioning method is further provided, and is applied to a second device, where the second device is a guardian device of a first device. For example, the first device is a kids' watch, and the second device is a mobile phone of a parent. The method includes: receiving a geographical position of the first device that is sent by a cloud; displaying the geographical position of the first device; displaying a first shortcut, where the first shortcut is used for contacting the first device through a surrounding device of the first device; receiving an operation for the first shortcut; and sending first information to the cloud, where the first information is used to trigger the cloud to send reminder information to the first device through the surrounding device.

In embodiments of this application, the mobile phone of the parent may contact the kids' watch through a surrounding device of the kids' watch, to ensure that the kids' watch can be contacted as much as possible, and ensure kid safety.

In a possible design, the method further includes: displaying N shortcuts, where the N shortcuts include at least one of the following:
a second shortcut for contacting the first device via a phone call;
a third shortcut for contacting the first device via an SMS message;
a fourth shortcut for contacting the first device via a voice call; or
a fifth shortcut for contacting the first device via a video call.

In embodiments of this application, one or more shortcuts may be displayed on the mobile phone of the parent. Therefore, the parent may quickly contact the kids' watch, so that efficiency is high.

In a possible design, a quantity and/or display statuses of the N shortcuts change with a current state of the first device.

In a possible design, the current state of the first device includes a current battery level of the first device.

For example, when the current battery level of the watch is greater than or equal to a preset value (for example, 20%), all the N shortcuts are displayed. When the current battery level of the watch is less than the preset value (for example, 20%), only some shortcuts may be displayed. For example, only a shortcut corresponding to a contact manner with low power consumption is displayed, and a shortcut corresponding to a contact manner with high power consumption is not displayed. For example, the fifth shortcut corresponding to a video call is not displayed. Alternatively, when the current battery level of the watch is less than the preset value (for example, 20%), all the N shortcuts may be displayed, but display statuses of some shortcuts are gray-out states (that is, grayed out). For example, the fifth shortcut corresponding to a video call is grayed out. In this way, the parent may be prevented from accidentally touching the fifth shortcut to initiate a video call to the kids' watch, which causes the kids' watch to quickly lose power.

According to a third aspect, a positioning method is further provided, and is applied to a third device, where the third device includes a short-range communication module. The method includes: receiving, through the short-range communication module, a positioning request sent by a first device, where the first device is a surrounding device of the third device, and the positioning request is used to trigger the third device to report a geographical position to a cloud; sending a geographical position to the cloud; receiving a first message sent by the cloud, where the first message is used to trigger the third device to send reminder information to the first device; and sending a reminder message to the first device.

In embodiments of this application, the third device may assist a surrounding first device in positioning, and may further help contact the first device, to ensure safety of a user (for example, a kid) of the first device.

In a possible design, the geographical position sent to the cloud is a geographical position of the third device, or is a geographical position of the first device that is calculated based on a geographical position of the third device.

In embodiments of this application, the third device may calculate the geographical position of the first device, and then send the geographical position to the cloud. This improves positioning accuracy of the first device without consuming power of the first device.

In a possible design, before the sending the geographical position to the cloud, the method further includes: outputting prompt information, where the prompt information is used for reminding whether to agree to assist in positioning; and receiving an agreement instruction.

In embodiments of this application, after obtaining agreement of the user, the third device may assist the first device in positioning, so that user experience is good.

According to a fourth aspect, a positioning method is further provided, and is applied to a cloud, where the method includes: receiving a geographical position of a first device from a third device; sending the geographical position to a guardian device of the first device; receiving a first message sent by the guardian device, where the first message is used to trigger the cloud to send reminder information to the first device through the third device; and sending a second message to the third device based on the first message, where the second message is used to trigger the third device to send a reminder message to the first device.

In embodiments of this application, the cloud may send the reminder message to the first device through the third device, to contact the first device in time.

In a possible design, the method further includes: sending prompt information to the guardian device of the first device, to remind to view the geographical position.

In embodiments of this application, after receiving the geographical position of the first device from the third device, the cloud may prompt the guardian device of the first device to view the geographical position, to ensure as far as possible that a guardian can learn of the geographical position of the first device in time.

In a possible design, a plurality of third devices exist, a plurality of geographical positions of the first device exist, and before the sending the geographical position to the guardian device of the first device, the method further includes: determining one geographical position based on the plurality of geographical positions; and sending the geographical position to the guardian device of the first device includes: sending the determined geographical position to the guardian device of the first device.

According to a fifth aspect, an electronic device is further provided, including:
a processor, a memory, and one or more programs, where
the one or more programs are stored in the memory, the one or more programs include instructions, and when the instructions are executed by the processor, the electronic device is enabled to perform steps of the method provided in any one of the first aspect, the second aspect, the third aspect, or the fourth aspect.

According to a sixth aspect, a communication system is further provided, including a first device and a second device.

The first device is configured to perform steps of the method according to the first aspect.

The second device is configured to perform steps of the method according to the second aspect.

According to a seventh aspect, a communication system is further provided, including a first device, a second device, a surrounding device, and a cloud.

The first device is configured to perform steps of the method according to the first aspect.

The second device is configured to perform steps of the method according to the second aspect.

The surrounding device is configured to perform steps of the method according to the third aspect.

The cloud is configured to perform steps of the method according to the fourth aspect.

According to an eighth aspect, a computer-readable storage medium is further provided, where the computer-readable storage medium is configured to store a computer program, and when the computer program runs on a computer, the computer is enabled to perform steps of the method provided in any one of the first aspect, the second aspect, the third aspect, or the fourth aspect.

According to a ninth aspect, a computer program product is further provided, including a computer program, where when the computer program runs on a computer, the computer is enabled to perform steps of the method provided in any one of the first aspect, the second aspect, the third aspect, or the fourth aspect.

According to a tenth aspect, a chip is further provided, where the chip is coupled to a memory in an electronic device, and is configured to invoke a computer program stored in the memory and perform the technical solutions in any one of the first aspect, the second aspect, the third aspect, or the fourth aspect in embodiments of this application. "Coupling" in embodiments of this application refers to two components being directly or indirectly combined with each other.

For technical effects that can be achieved according to the second aspect to the tenth aspect, refer to the descriptions of the technical effects that can be achieved according to corresponding design solutions in the first aspect. Details are not described herein again in this application.

### BRIEF DESCRIPTION OF DRAWINGS

FIG. 1 is a diagram of a communication system according to an embodiment of this application;
FIG. 2A is another diagram of a communication system according to an embodiment of this application;
FIG. 2B is a schematic flowchart of a positioning method according to an embodiment of this application;
FIG. 3A and FIG. 3B are diagrams of a surrounding device outputting a prompt according to an embodiment of this application;
FIG. 4A to FIG. 4C and FIG. 5A and FIG. 5B are diagrams of interfaces of a mobile phone of a parent according to an embodiment of this application;
FIG. 6A and FIG. 6B are diagrams of switching of a positioning mode of a kids' watch according to an embodiment of this application;
FIG. 7A to FIG. 7C are diagrams of manually selecting a positioning mode on a kids' watch according to an embodiment of this application;
FIG. 8 is a diagram of an electronic device according to an embodiment of this application; and
FIG. 9 is another diagram of an electronic device according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" refers to two or more. In addition, it should be understood that, in descriptions of this specification, terms such as "first", "second", and "third" are merely used for distinguishing and description, but should not be understood as indicating or implying relative importance, or should not be understood as indicating or implying a sequence. For example, a first device and a second device do not represent importance degrees of the first device and the second device or a sequence of the first device and the second device, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application.

Reference to "an embodiment", "in some examples", "some embodiments", or the like described in this specification refers to that specific features, structures, or characteristics described with reference to the embodiment are included in one or more embodiments of this specification. Therefore, statements such as "in some examples", "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

**The following describes a positioning method provided in embodiments of this application with reference to the accompanying drawings.**

As described above, vulnerable groups such as kids or the elderly are prone to getting lost. Therefore, an embodiment of this application provides a positioning method. A kid is used as an example. The kid may wear a wearable device. The wearable device has a positioning function, and can position a current geographical position. A mobile phone of a parent can obtain the current geographical position of the wearable device. Therefore, the parent can view the geographical position of the kid on the mobile phone, and quickly find the kid based on the geographical position. According to the technical solutions in embodiments of this application, kids can be prevented from getting lost as much as possible, thereby improving safety.

Embodiments of this application provide two positioning solutions, which are separately described in the following. For ease of description, the following uses an example in which the wearable device is a watch for description.

### First positioning solution

In this solution, a watch worn by a kid includes a global positioning system (Global Positioning System, GPS), configured to position a current geographical position. After obtaining the current geographical position through the GPS, the watch may send the current geographical position to a mobile phone of a parent. Considering that the kid may be located far away from the parent, for example, the parent is in the company and the kid is in school, communication between a kids' watch and the mobile phone of the parent may be long-range communication. A feasible manner of long-range communication is to perform communication through a cloud.

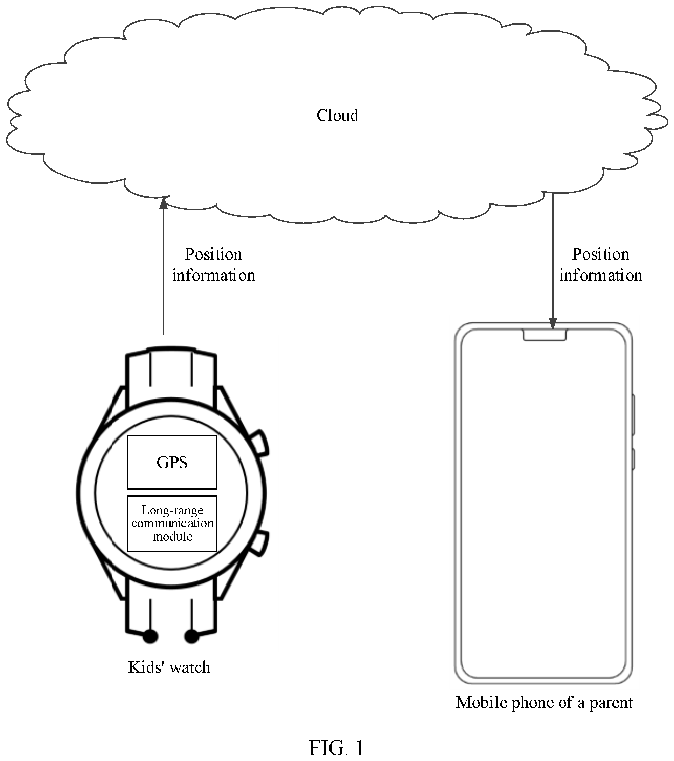

For example, FIG. 1 is a diagram of a communication system according to an embodiment of this application. In FIG. 1, the kids' watch communicates with the mobile phone of the parent through the cloud. For example, the watch includes a long-range communication module, configured to communicate with the cloud. Certainly, although not shown in FIG. 1, the mobile phone of the parent also includes a long-range communication module, configured to communicate with the cloud. For example, the long-range communication module may be a Wi-Fi module or a mobile communication module. The Wi-Fi module is configured to access Wi-Fi. The mobile communication module is configured to access a mobile data network, and the mobile data network may be, for example, 3G, 4G, 5G, or 6G.

Therefore, a positioning procedure of the communication system shown in FIG. 1 may include: after the GPS in the watch positions the current geographical position, the watch sends the current geographical position to the cloud through the long-range communication module. The cloud sends the current geographical position of the watch to the mobile phone of the parent. It may be understood that, before sending the current geographical position of the watch to the mobile phone of the parent, the cloud may further first determine which device to send the current geographical position of the watch to, and after determining to send the current geographical position of the watch to the mobile phone, send the geographical position to the mobile phone. In a possible implementation, an association relationship between the kids' watch and the mobile phone of the parent is recorded in the cloud, and the cloud determines, based on the association relationship, that the current geographical position of the watch needs to be sent to the mobile phone of the parent. There are a plurality of manners in which the cloud obtains the association relationship between the watch and the mobile phone, for example, including but not limited to the following manner 1 or manner 2.

Manner 1: The kids' watch and the mobile phone of the parent are registered in the cloud through a same account (for example, a Huawei account). Therefore, the cloud records that devices corresponding to the account include the watch and the mobile phone. In this way, the cloud obtains the association relationship between the kids' watch and the mobile phone of the parent. For example, each time the watch reports the geographical position to the cloud, the current login account of the watch may be reported together. When determining that the account corresponds to another device, that is, the mobile phone, the cloud sends the geographical position of the watch to the mobile phone.

Manner 2: The kids' watch is registered with the cloud through an account A, and the mobile phone of the parent is registered with the cloud through an account B, where the account A is different from the account B. Optionally, the mobile phone may obtain the account A of the watch, and then send a binding request to the cloud, where the binding request includes the account A and the account B. After receiving the binding request, the cloud records an association relationship between the account A and the account B. The mobile phone may obtain the account A of the watch in a plurality of manners. For example, the mobile phone may scan a QR code on the watch to obtain the account A of the watch, or may manually enter the account A of the watch. The foregoing descriptions use an example in which the mobile phone obtains the account A of the watch and then sends the binding request to the cloud. It may be understood that, the watch may alternatively obtain the account B of the mobile phone, and then the watch sends the binding request to the cloud, where the binding request includes the account A and the account B. A principle is the same as that described above. Details are not described again. Therefore, each time the watch reports the geographical position to the cloud, the current login account A of the watch may be reported together. The cloud determines, based on the association relationship between the account A and the account B, to send the geographical position of the watch to a device corresponding to the account B, that is, the mobile phone.

It should be noted that, in FIG. 1, an example in which a kids' watch includes a GPS is used. Optionally, in addition to the GPS, another positioning manner may be used, for example, global navigation satellite system (Global Navigation Satellite System, GNSS) positioning. This is not limited in embodiments of this application.

Therefore, through the foregoing positioning solution, the parent may view a current geographical position of the kid through the mobile phone, to quickly find the kid and improve safety. In addition, because the watch performs positioning through the GPS, positioning is accurate, so that safety is higher.

### Second positioning solution

Considering that power consumption is high and a battery life is poor when the watch performs positioning through the GPS, in this solution, the watch does not perform positioning through the GPS, but performs positioning with assistance of another device. Because GPS positioning is not used, power consumption of the watch is reduced and a battery life is improved.

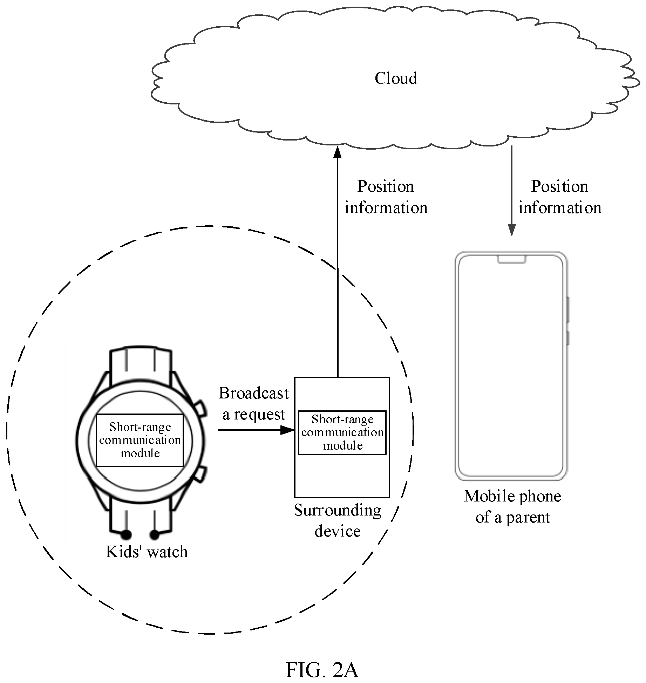

In this solution, the watch needs to use another device to perform positioning. If another device is far away from the watch, positioning accuracy cannot be guaranteed. Therefore, in this solution, it is considered that a device near the watch is used to assist in positioning, to improve positioning accuracy. Therefore, the watch may include a short-range communication function, configured to communicate with a nearby device (which is referred to as a surrounding device for short). For example, FIG. 2A is another schematic diagram of a communication system according to an embodiment of this application. Different from FIG. 1, the watch in FIG. 2A includes a short-range communication module, configured to implement short-range communication. Optionally, the short-range communication module may be based on a Bluetooth (Bluetooth) technology, a Bluetooth low energy (Bluetooth Low Energy, BLE) technology, a near field communication (Near Field Communication, NFC) technology, an ultra-wideband (Ultra-wideband, UWB) technology, or the like. This is not limited in embodiments of this application. Therefore, in FIG. 2A, the watch may establish communication with the surrounding device through the short-range communication module, to perform positioning with assistance of the surrounding device.

Optionally, the surrounding device may be any type of device. In some examples, the surrounding device may be a mobile device, for example, may be a wearable device such as a watch or a band, or may be a mobile phone, a tablet computer, a notebook computer, or the like, or may be a vehicle-mounted device, or the like. An example scenario is that the kid carries the watch on a street, and the watch performs positioning with assistance of a mobile device of a surrounding passerby. In some other examples, the surrounding device may also be a non-mobile device. The non-mobile device may be understood as a device with a fixed position, for example, a smart sign, a smart bus stop sign, a road side unit (Road Side Unit, RSU), or a smart utility pole disposed on a road. In conclusion, a specific type of the surrounding device is not limited in embodiments of this application.

In embodiments of this application, the watch performs positioning with assistance of the surrounding device, including but not limited to the following two solutions.

**Solution 1:** The watch sends a positioning request to the surrounding device through the short-range communication module. After receiving the positioning request, the surrounding device sends a geographical position to the watch. The geographical position includes at least one of the following two cases.

Case 1: The geographical position includes a current geographical position of the surrounding device, for example, the current geographical position detected by the surrounding device through a local GPS. In other words, the watch obtains a geographical position, where the geographical position is not obtained through the GPS in the watch, but is obtained through the GPS of the surrounding device. Because the watch does not use GPS positioning, power consumption is low. In this case, after receiving the geographical position of the surrounding device, the watch may report the geographical position to the cloud. Alternatively, after receiving the geographical position of the surrounding device, the watch may calculate the current geographical position of the watch based on the geographical position of the surrounding device, and then report the calculated current geographical position of the watch to the cloud. For example, the watch may calculate the current geographical position of the watch based on the geographical position of the surrounding device and a position relationship between the surrounding device and the watch. Optionally, a relative position relationship between the watch and the surrounding device may include a direction and/or a distance of the watch with the surrounding device as a center. For example, with the surrounding device as a center, the watch is located three meters to the left of a center position, and the surrounding device determines that a position three meters to the left of the current geographical position of the surrounding device is the current geographical position of the watch. Optionally, the relative position relationship between the watch and the surrounding device may be obtained through a Bluetooth AOA positioning technology or another technology. Details are not described in embodiments of this application.

Case 2: The geographical position includes the current geographical position of the watch that is calculated by the surrounding device based on the current geographical position of the surrounding device. For a process of calculating the current geographical position of the watch, refer to the foregoing descriptions. Details are not described again. In this case, the geographical position received by the watch from the surrounding device is the current geographical position of the watch obtained through calculation. Therefore, the watch does not need to perform calculation by the watch, thereby reducing power consumption of the watch.

**Solution 2:** The watch sends the positioning request to the surrounding device through the short-range communication module. After receiving the positioning request, the surrounding device reports the geographical position to the cloud. The geographical position may include the current geographical position of the surrounding device (that is, the foregoing case 1), and/or the current geographical position of the watch that is calculated by the surrounding device based on the current geographical position of the surrounding device (that is, the foregoing case 2).

It should be noted that, the foregoing solution 1 and solution 2 may be used separately, or may be used in combination. A combination of the solution 1 and the solution 2 is used as an example. The watch sends the positioning request to the surrounding device through the short-range communication module. After receiving the positioning request, the surrounding device separately sends the geographical position to the watch and the cloud. The geographical position may include at least one of the foregoing case 1 and case 2.

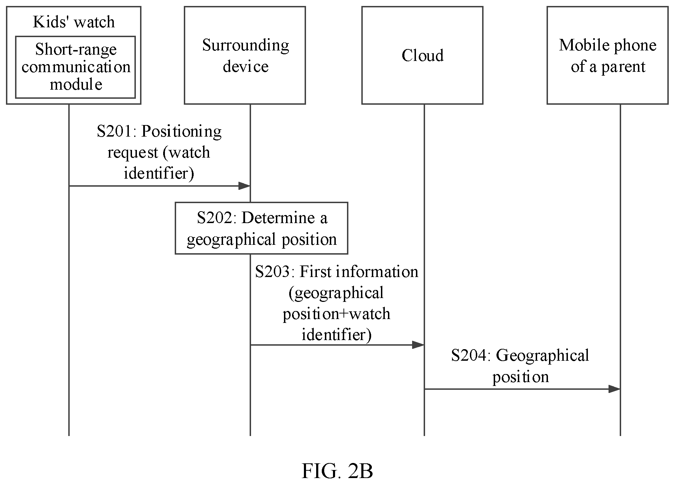

**The following mainly uses the solution 2 as an example for description.** FIG. 2B is a schematic flowchart of a positioning method according to an embodiment of this application. The method may be applied to the communication system shown in FIG. 2A. As shown in FIG. 2B, the procedure includes the following steps.

S201: A short-range communication module in a kids' watch sends a positioning request to a surrounding device. Correspondingly, the surrounding device receives the positioning request.

In some examples, the positioning request may include an identifier of the watch, and the identifier may include a device identifier (for example, a device model) of the watch and/or a current login account, for example, a system account. For example, the watch is a Huawei watch and the system account may be a Huawei account.

S202: The surrounding device determines a geographical position.

In some embodiments, before S202, the method may further include: The surrounding device enables a positioning assistance function. The positioning assistance function may be understood as a function that helps other devices in positioning. Optionally, the positioning assistance function in the surrounding device may be automatically enabled or manually enabled.

Automatic enabling is used as an example. For example, after receiving the positioning request, the surrounding device may automatically enable the positioning assistance function. Optionally, when determining that a condition is satisfied, the surrounding device may disable the positioning assistance function, to reduce power consumption. For example, the condition may include: reporting of the geographical position is completed, and/or an enabling duration of the positioning assistance function reaches a preset duration.

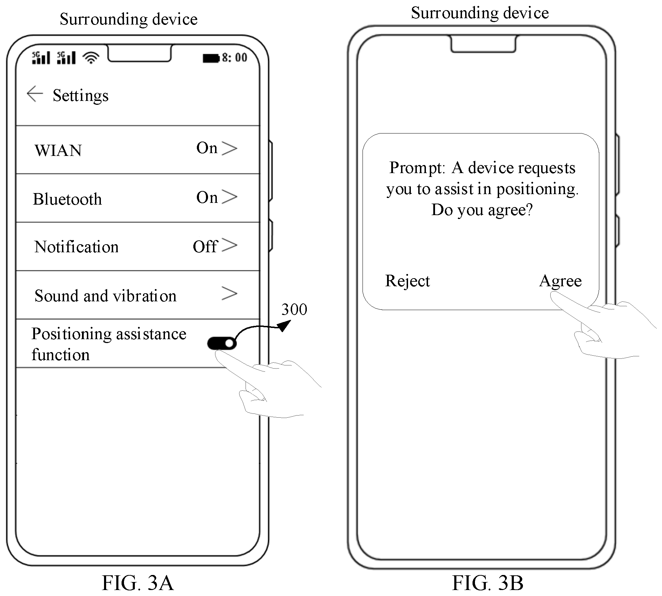

Manual enabling is used as an example, and an example in which the surrounding device is the mobile phone is used. For example, referring to FIG. 3A, the mobile phone displays an interface, where the interface may be an interface for a settings application in the mobile phone. The interface includes a switch 300 of the positioning assistance function. When receiving an operation on the switch 300, the mobile phone enables the positioning assistance function. It should be noted that, in FIG. 3A, an example in which the switch 300 is located in the settings application is used. Optionally, the switch 300 may be alternatively located in another position in the mobile phone. This is not limited in embodiments of this application.

In some embodiments, before S202, the method may further include: The surrounding device outputs prompt information, where the prompt information is used for reminding whether to agree to assist in positioning. After receiving an agreement instruction, the surrounding device may perform S202. For example, referring to FIG. 3B, an example in which the surrounding device is the mobile phone is used, and the prompt information is displayed on the mobile phone: A device requests you to assist in positioning. Do you agree? The mobile phone may further display an agree button and a reject button. When receiving the operation on the agree button, the mobile phone may perform S202. In FIG. 3B, it should be noted that because the positioning request received by the surrounding device includes the identifier of the watch, to protect safety of the kid, the identifier of the watch may not be displayed in the prompt information displayed by the surrounding device. Optionally, in FIG. 3B, when the mobile phone receives an operation for the agree button, if it is detected that the positioning assistance function is not currently enabled on the mobile phone, the positioning assistance function may be automatically enabled or the interface in FIG. 3A may be displayed, so that a user manually enables the positioning assistance function.

Optionally, the geographical position determined by the surrounding device in S202 may include: the current geographical position of the surrounding device, and/or the current geographical position of the watch that is calculated by the surrounding device based on the current geographical position of the surrounding device. For a process of calculating the current geographical position of the watch, refer to the foregoing descriptions. Details are not described herein again. The current geographical position of the surrounding device may be the current geographical position detected by the GPS in the surrounding device.

S203: The surrounding device sends first information to a cloud, where the first information includes a geographical position and first indication information. The first indication information is used to indicate that the geographical position is the geographical position of the watch.

Optionally, the first indication information may be used to indicate the identifier of the watch. For details of the identifier of the watch, refer to the foregoing descriptions. It should be noted that, in S203, an example in which the geographical position and the first indication information are carried in a same piece of information (or a packet) for sending is used. Optionally, the geographical position and the first indication information may be carried in different messages (or packets) for sending, that is, the geographical position and the first indication information are separately sent.

In some examples, to protect privacy of the surrounding device, the surrounding device may not send local information to the cloud. The local information is, for example, a device identifier, a system account, or a phone number. In other words, the cloud receives the geographical position sent by an anonymous device, and the geographical position is the geographical position of the watch. Certainly, the surrounding device may also send the local information to the cloud. This is not limited in embodiments of this application.

S204: The cloud sends the geographical position to a mobile phone of a parent.

It may be understood that, an association relationship between the kids' watch and the mobile phone of the parent is recorded in the cloud, and it is determined, through the association relationship, that the geographical position of the watch needs to be sent to the mobile phone of the parent. For a process of the cloud obtaining the association relationship, refer to the foregoing descriptions.

In some embodiments, when the watch is in an offline state, the foregoing second positioning solution may be used for positioning (that is, positioning is performed with assistance of the surrounding device). The offline state may include a power-off state, being in an airplane mode, and the like. An example in which the watch is powered off (for example, powered off due to a low battery level) is used. In an implementation, when the watch is powered off, a specific amount of battery level may be reserved in the watch, and the reserved amount of power may support normal running of the short-range communication module in the watch. Therefore, the second positioning solution can be used for positioning. In other words, in embodiments of this application, offline positioning of the watch may be implemented.

In the foregoing embodiment, an example in which one surrounding device exists is used. It may be understood that, a plurality of surrounding devices may exist. In this case, the following two solutions may be included.

### Solution 1

The watch does not pay attention to a quantity of surrounding devices, but just sends the positioning request, where the positioning request may be received by one surrounding device, or may be received by the plurality of surrounding devices. If the positioning request is received by the plurality of surrounding devices, each of the plurality of surrounding devices may perform S202 and S203. Therefore, the cloud receives a plurality of geographical positions. In this case, the cloud may have a plurality of processing manners. For example, the cloud may send all the plurality of geographical positions to the mobile phone of the parent. Alternatively, the cloud may determine one geographical position based on the plurality of geographical positions, and then send the determined geographical position to the mobile phone of the parent. There may be a plurality of manners in which the cloud determines one geographical position based on the plurality of geographical positions. For example, the cloud randomly selects one geographical position from the plurality of geographical positions. Alternatively, the cloud draws a circle with each of the plurality of geographical positions as a center and a preset length (for example, five meters) as a radius. In this way, a plurality of circles are obtained. The cloud may determine that an overlapping region of the plurality of circles is a region in which the kids' watch is located, and send a geographical position (for example, a central position of the region) of the region to the mobile phone of the parent.

### Solution 2

The watch pays attention to the quantity of surrounding devices. For example, when determining that only one surrounding device exists, the watch may send the positioning request to the device; or when determining that the plurality of surrounding devices exist, the watch may determine one target device from the plurality of surrounding devices, and then send the positioning request to the target device. In this manner, the watch needs to determine the quantity of surrounding devices. For example, the watch may determine the quantity of surrounding devices through the short-range communication module (for example, Bluetooth), and certainly, may further determine a device type of the surrounding device, for example, the device model. A specific implementation principle is not described in detail in this application. Optionally, the watch may determine the target device from the plurality of surrounding devices in a plurality of manners. Manner 1: The watch randomly selects one device from the plurality of surrounding devices as the target device. Manner 2: The watch determines a device closest to the watch in the plurality of surrounding devices as the target device. Manner 3: The watch determines the target device based on device types of the plurality of surrounding devices. As described above, the surrounding device may include a mobile device of a passerby, or may include a non-mobile device disposed on a roadside, for example, the road side unit RSU. Therefore, in manner 3, if the plurality of surrounding devices include the mobile device and the non-mobile device (for example, the road side unit RSU), the watch may determine the RSU as the target device, which has high safety. It should be noted that, three manners of the watch determining the target device are used as examples herein. In actual application, the target device may be further determined in another manner. Examples are not provided in embodiments of this application. In the solution 2, after determining one target device, the watch sends the positioning request to the target device. The target device performs S202 and S203. Therefore, the cloud receives one geographical position, that is, a geographical position sent by the target device, and the cloud may send the geographical position to the mobile phone of the parent.

In some examples, when determining that the quantity of surrounding devices is 0, the watch may output prompt information to prompt the user to move.

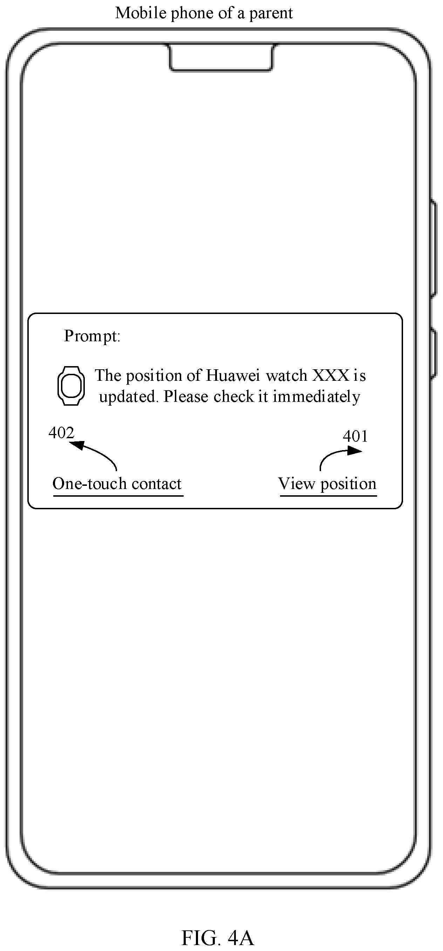

As described above, the cloud receives the geographical position of the watch sent by the anonymous device. In some examples, after receiving the geographical position of the watch sent by the anonymous device, the cloud may send the prompt information to the mobile phone of the parent, to prompt the parent to view the position of the watch. Optionally, if receiving the geographical position reported by the watch, the cloud may not send the prompt information to the mobile phone of the parent. For example, referring to FIG. 4A, the mobile phone of the parent displays prompt information: The position of the Huawei watch XXX is updated. Please check it immediately. Optionally, the prompt information may be other content. For example, the prompt information may be: The Huawei watch XXX is positioned through an anonymous device. Please check it immediately; or the prompt information may be: The Huawei watch XXX has a low battery level. Please check it immediately. This is because, when the battery level of the watch is low, to reduce a power consumption speed, positioning may be performed with assistance of the surrounding device. Therefore, after receiving the geographical position of the watch sent by the anonymous device, the cloud may infer that the battery level of the watch is low, and therefore send the prompt information to the mobile phone of the parent, to remind that the battery level of the watch is low.

Still as shown in FIG. 4A, the mobile phone may further display shortcuts, for example, a position viewing button 401 and a one-touch contact button 402.

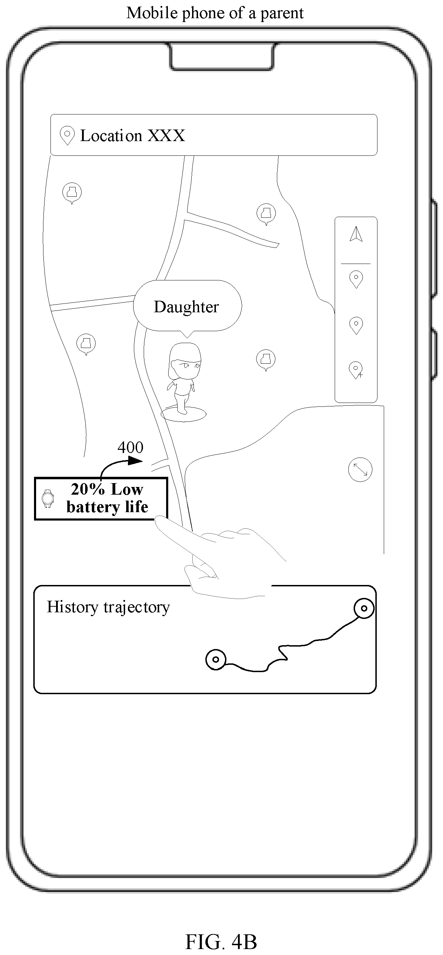

In FIG. 4A, when receiving an operation for the position viewing button 401, the mobile phone may quickly open the geographical position of the watch, for example, an interface in FIG. 4B is displayed, where the interface includes a map, and a current position of the kids' watch may be marked on the map. Optionally, the interface of FIG. 4B may further include prompt information 400, used to indicate a current state of the kids' watch. The current state may include current battery level, an online state, or an offline state. The offline state includes a power-off state or being in an airplane mode. The online state includes a power-on state and not being in an airplane mode. It should be noted that, a display position of the prompt information 400 is not limited in embodiments of this application, and is not limited to being displayed in the interface FIG. 4B, and may be further displayed in another interface.

In FIG. 4A, when receiving an operation for the one-touch contact button 402, the mobile phone may contact the watch. Contact manners may include any one of the following (1) to (4). (1) Dial the phone number of the watch. (2) Initiate a video call to the watch, where the video call may be a video call of an instant messaging application (for example, Huawei MeeTime). (3) Initiate a voice call to the watch, where the voice call may be a voice call of the instant messaging application (for example, Huawei MeeTime). (4) Contact the watch through a positioning assistance device. The positioning assistance device is the surrounding device in FIG. 2B.

In some examples, the mobile phone of the parent cannot directly contact the surrounding device (where the surrounding device is anonymous). Therefore, in (4), the mobile phone of the parent may contact the surrounding device by using the cloud, and then contact the kids' watch through the surrounding device. For example, the mobile phone of the parent may send reminder information to the cloud. After receiving the reminder information, the cloud sends the reminder information to the watch if the watch can be contacted, or sends the reminder information to the surrounding device if the watch cannot be contacted (for example, the watch is offline). After receiving the reminder information, the surrounding device sends the reminder information to the kids' watch. As described above, when the watch is offline, a part of battery life may be reserved to ensure normal use of the short-range communication module. Therefore, when the watch is offline, the watch may also receive the reminder information sent by the surrounding device. After receiving the reminder information, the watch may output the reminder information. The reminder message may be used for prompting for charging as soon as possible, or contacting a parent as soon as possible, or returning home as soon as possible, and the like. Optionally, a manner in which the watch outputs the reminder information may include: vibration, ringing, outputting a text message, outputting voice information, and the like, for example, voice playing: Please charge as soon as possible, and contact the parent in time. As described above, the plurality of surrounding devices may exist, that is, the cloud receives geographical positions reported by the plurality of surrounding devices. In this case, the cloud may randomly select one surrounding device and send the reminder information to the surrounding device, or send the reminder information to each surrounding device.

In some other examples, the mobile phone of the parent can directly contact the surrounding device. For example, the surrounding device sends the local device information (for example, contact information of the surrounding device) to the cloud, and the cloud sends the contact information of the surrounding device to the mobile phone of the parent. In this case, the mobile phone of the parent may directly send the reminder information to the surrounding device based on the contact information. After receiving the reminder information, the surrounding device sends the reminder information to the kids' watch.

In the foregoing embodiment, the cloud receives the reminder information from the mobile phone of the parent, and sends the reminder information to the kids' watch through the surrounding device. In some other examples, after receiving the geographical position of the watch sent by the anonymous device, the cloud may attempt to send the reminder information to the watch by itself (optionally, the reminder information herein may be information pre-stored in the cloud). If sending fails, the cloud sends the reminder information to the watch through the surrounding device. The reminder message may be used for prompting the watch to be charged as soon as possible, or contacting a parent as soon as possible, or returning home as soon as possible, and the like.

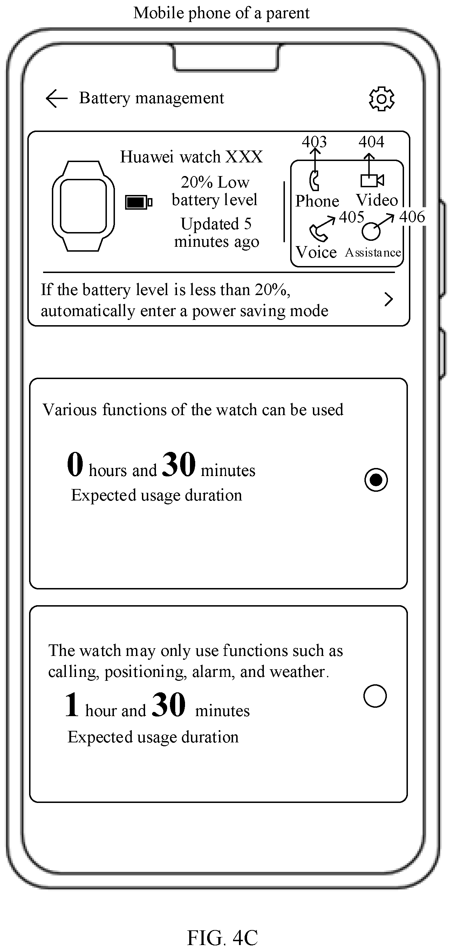

In FIG. 4A, when receiving an operation for the one-touch contact button 402, the mobile phone may further display an interface shown in FIG. 4C. The interface includes a plurality of shortcuts used for contacting the kids' watch. For example, the interface includes an icon 403, an icon 404, an icon 405, and an icon 406. The icon 403 is used for contacting the watch via a phone call. When the mobile phone receives an operation for the icon 403, the mobile phone calls the watch. The icon 404 is used for a video call. When the mobile phone receives an operation for the icon 404, the mobile phone initiates a video call request to the watch. The icon 405 is used for a voice call. When the mobile phone receives an operation for the icon 405, the mobile phone initiates a voice call request to the watch. The icon 406 is used for contacting the kids' watch through the positioning assistance device. After receiving the operation for the icon 406, the mobile phone contacts the kids' watch through the positioning assistance device. For a specific implementation process, refer to the foregoing descriptions. Optionally, the mobile phone may alternatively open an interface in FIG. 4C in another manner. For example, in FIG. 4B, when receiving an operation for the prompt information 400, the mobile phone may also open the interface in FIG. 4C.

In the foregoing embodiment, in FIG. 4C, an example in which the mobile phone displays four icons (for example, the icon 403, the icon 404, the icon 405, and the icon 406) is used. In actual application, more or fewer icons may be displayed. For example, an icon corresponding to an SMS message may be further displayed, and the SMS message may be sent to the kids' watch through the icon.

In the foregoing embodiment, in FIG. 4C, the four icons (for example, the icon 403, the icon 404, the icon 405, and the icon 406) are displayed on the mobile phone, respectively corresponding to four contact manners. Optionally, although not shown in FIG. 4C, the mobile phone may further display duration for which the watch can last for each of the four contact manners. The icon 404 is used as an example. The icon 404 corresponds to a video call. The mobile phone may further display duration for which the watch can last for a video call. For example, the mobile phone may display prompt information 1: The watch can last for 20 minutes for a video call. The icon 405 is used as an example. The icon 405 corresponds to a voice call. The mobile phone may further display duration for which the watch can last for a voice call. For example, the mobile phone may display prompt information 2: The watch can last for 30 minutes for a voice call. It should be noted that, display positions of the prompt information 1, the prompt information 2, and the like on the mobile phone are not limited in embodiments of this application.

In FIG. 4C, an example in which the mobile phone displays the four icons (that is, the icon 403, the icon 404, the icon 405, and the icon 406) is used. In some other embodiments, a quantity and/or display statuses of the four icons may dynamically change. For example, a quantity and/or display statuses of the four icons may change with the current state of the watch. The current state of the watch includes the current battery level, the online state, the offline state, and the like of the watch.

An example in which the quantity and/or the display statuses of the four icons dynamically change with the current battery level of the watch is used. For example, when the current battery level of the watch is greater than or equal to a preset value (for example, 20%), all the four icons are displayed. When the current battery level of the watch is less than the preset value (for example, 20%), only some icons may be displayed, for example, only icons for a contact manner with low power consumption are displayed, for example, only the icon 403, the icon 405, and the icon 406 are displayed, and the icon 404 (the icon for a video call) is not displayed. Alternatively, only the icon 405 and the icon 406 may be displayed, and the icon 403 (the icon for a phone) and the icon 404 (the icon for a video call) are not displayed. The icon 404 is used as an example. A reason why the icon 404 is not displayed is that when the battery level of the watch is not sufficient, if the mobile phone displays the icon 404 for a video call, the parent may accidentally touch the icon and initiate a video call to the watch, which increases the power consumption speed of the watch. Therefore, the mobile phone may not display the icon 404. Alternatively, when the current battery level of the watch is less than the preset value (for example, 20%), the four icons may all be displayed. To prevent the user from triggering a video call, a display status of the icon 404 is a gray-out state (that is, grayed out). In this case, when the user taps the icon 404, a video call is not initiated to the watch.

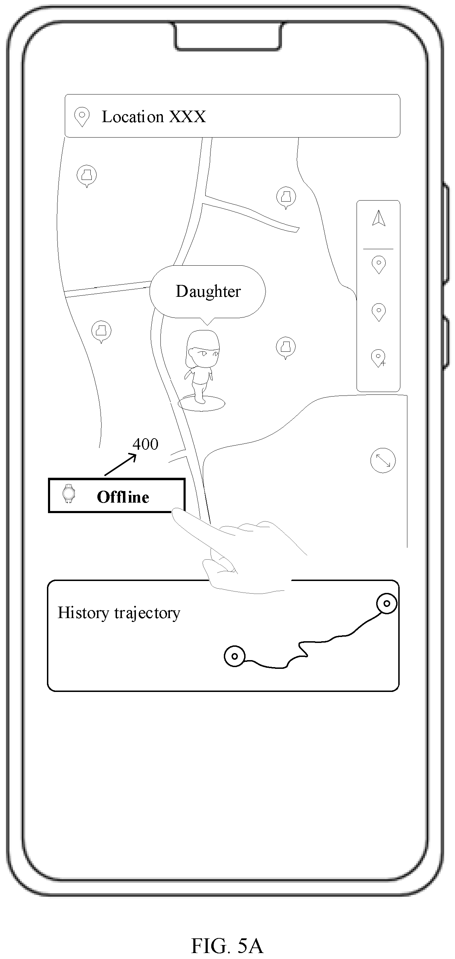

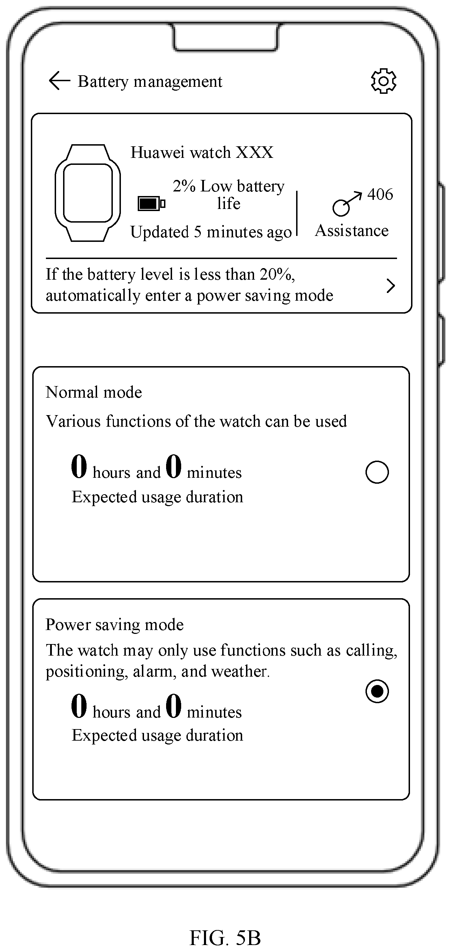

An example in which the quantity and/or the display statuses of the four icons dynamically change with the online state or the offline state of the watch is used. For example, when the watch is in the online state, the mobile phone may display the four icons. When the watch is in the offline state, the mobile phone may only display the icon 406, that is, the icon for contacting the watch through an assistance device. For example, referring to FIG. 5A, the mobile phone displays an interface, where the interface includes the prompt information 400: offline. When receiving an operation for the prompt information 400, the mobile phone may display an interface FIG. 5B, where the interface includes the icon 406. When receiving an operation for the icon 406, the mobile phone contacts the watch through the positioning assistance device. For a specific implementation principle, refer to the foregoing descriptions. Details are not described herein again.

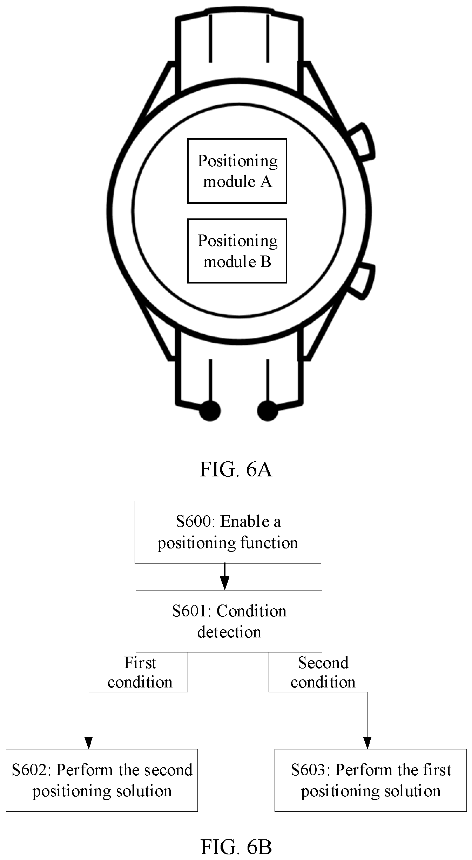

In the foregoing embodiment, two positioning solutions are provided, that is, a first positioning solution (positioning through the GPS) and a second positioning solution (performing positioning with assistance of a surrounding device), which may also be referred to as two positioning modes. In some examples, the watch includes only one positioning solution. For example, only one positioning solution is configured by default when the watch is delivered from a factory, and the positioning solution may be any one of the foregoing two positioning solutions. In some other examples, the watch includes the foregoing two positioning solutions. For example, the foregoing two positioning solutions are configured by default at delivery, and the watch may select one of the two positioning solutions. With reference to FIG. 6A and FIG. 6B, the following describes how to perform positioning when the watch includes two positioning solutions.

FIG. 6A is a diagram of a wearable device according to an embodiment of this application. In FIG. 6A, an example in which the wearable device is a watch is used, and the watch includes a positioning module A and a positioning module B. The positioning module A includes a GPS and a long-range communication module, and can implement the foregoing first positioning solution. The positioning module B includes a short-range communication module, and can perform the foregoing second positioning solution.

FIG. 6B is a schematic flowchart of a positioning method according to an embodiment of this application. The method may be applied to the watch in FIG. 6A. As shown in FIG. 6B, the procedure includes the following steps.

S600: The watch enables a positioning function.

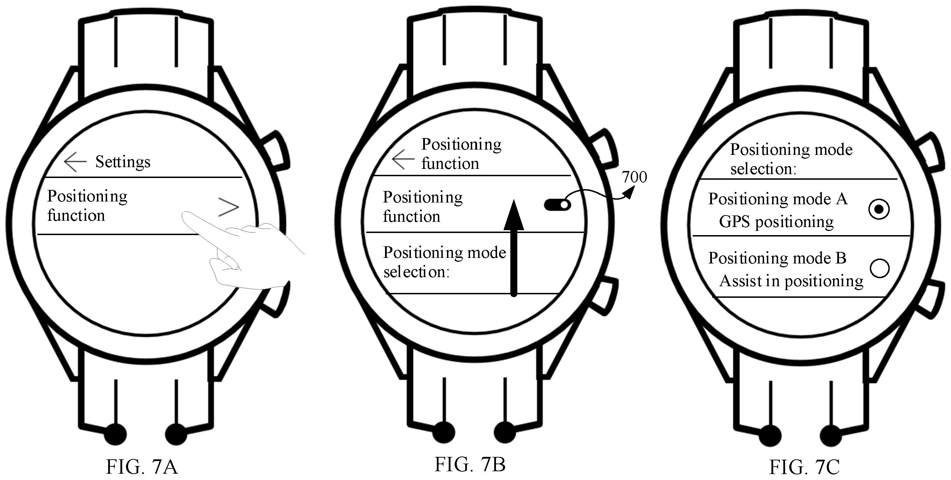

In some examples, the positioning function may be manually enabled or automatically enabled. Manual enabling is used as an example, and the watch may include a switch, configured to enable or disable the positioning function. For example, referring to FIG. 7A, the watch displays an interface of a settings application, where the interface includes an option of the positioning function. When receiving an operation for the option of the positioning function, the watch may display an interface in FIG. 7B, where the interface includes a switch 700 of the positioning function. The user may manually enable or disable the positioning function through the switch 700. Automatic enabling is used as an example. For example, when detecting that at least one of the following conditions is satisfied, the watch may automatically enable the positioning function. The condition includes:
**Condition 1:** Current time is within a preset period of time. For example, considering that a kid may go out during the daytime, a probability of getting lost is high, and a probability of getting lost at home at night is low, the positioning function may be enabled during the daytime. For example, the preset period of time may be from 8:00 a.m. to 8:00 p.m. Optionally, the preset period of time may be set by a watch system by default or manually set by the user. This is not limited in embodiments of this application.
**Condition 2:** Not contacting the parent for a long time. For example, when the watch determines that the parent is not contacted (for example, making a phone call or making a video/voice call) for more than first preset duration, the positioning function is automatically enabled. The first preset duration may be two hours, three hours, or the like. This is not limited in embodiments of this application.
**Condition 3:** The watch is not used for a long time. For example, when detecting that a screen-off duration reaches second preset duration, the watch automatically enables the positioning function.

It should be noted that, in addition to the foregoing three conditions, another condition may exist. This is not limited in embodiments of this application.

In the foregoing embodiment, the positioning function in the watch may be manually enabled or automatically enabled. In addition to the two manners, the positioning function of the watch may be enabled in another manner. For example, the mobile phone of the parent may control the watch to enable or disable the positioning function. For example, after receiving an instruction that is sent by the mobile phone of the parent for enabling the positioning function, the watch enables the positioning function. After receiving an instruction that is sent by the mobile phone of the parent for disabling the positioning function, the watch disables the positioning function. A process in which the parent controls, on the mobile phone, enabling and disabling of the positioning function of the kids' watch is not described in detail in embodiments of this application. For example, a switch that can control the positioning function of the kids' watch is displayed on the mobile phone of the parent, and the parent controls, through the switch, enabling and disabling of the positioning function of the kids' watch.

In embodiments of this application, after the watch enables the positioning function, because the watch includes two positioning solutions, the watch may further determine which positioning solution to use.

In some examples, the user may manually select which positioning solution to use. For example, FIG. 7B is still used as an example. When receiving a swipe-up operation, the watch may display an interface shown in FIG. 7C, where the interface includes options of two positioning solutions. If the user selects a positioning mode A, the first positioning solution is used. If the user selects a positioning mode B, the second positioning solution is used. In some other examples, the watch may determine, by itself, which positioning solution to use. The automatic determining process includes S601 to S603, which are described below. Certainly, in addition to manual or automatic selection of the positioning solution, there are other manners for determining the positioning solution. For example, the mobile phone of the parent may control which positioning solution the watch uses. For example, after receiving an instruction 1 sent by the mobile phone of the parent, the watch uses the first positioning solution, and after receiving an instruction 2 sent by the mobile phone of the parent, the watch uses the second positioning solution. A process in which the parent controls the positioning solution of the watch on the mobile phone is not described in detail in embodiments of this application. For example, options of two positioning solutions of the watch may be displayed on the mobile phone of the parent, and the parent may select one of the positioning solutions.

S601: The watch performs condition detection. When it is detected that a first condition is satisfied, S602 is performed (that is, a second positioning solution is used), and when it is detected that a second condition is satisfied, S603 is performed (that is, a first positioning solution is used).

The condition detection may include battery life detection, load detection, time detection, geo-fence detection, and the like.

Optionally, the first condition may include at least one of the following:
**Condition a:** The current battery level of the watch is insufficient. It should be noted that, in the second positioning solution, the watch performs positioning with assistance of the surrounding device, and power consumption is low. Therefore, if the current battery level of the watch is insufficient, the second positioning solution may be used to save the battery life. The current battery level of the watch being insufficient may include: The current battery level of the watch is less than or equal to a threshold 1. The threshold 1 may be 30%, 20%, 10%, or the like. This is not limited in embodiments of this application.
**Condition b:** A current load of the watch is high. It should be noted that, in the second positioning solution, the watch performs positioning with assistance of the surrounding device. Therefore, power consumption generated by the watch is low. If the current load of the watch is high, the second positioning solution may be used to reduce power consumption. Optionally, the current load of the watch being high may include: current CPU usage of the watch is high (for example, the current CPU usage is greater than or equal to a threshold 2), current storage space usage is high (for example, current storage space usage is greater than or equal to a threshold 3), and the like.
**Condition c:** Current time is within a first preset period of time. In embodiments of this application, it is considered that a probability of a kid getting lost is low in some periods of time. For example, in a period of time at school, a probability of a kid getting lost is low. Therefore, the second positioning solution may be used in this period of time, to reduce power consumption. Optionally, the first preset period of time may be set by the system by default or set by the user. This is not limited in embodiments of this application. It should be noted that, as mentioned above, when detecting that the current time is in the preset period of time (for example, from 8 a.m. to 8 p.m.), the watch enables the positioning function, where the first preset period of time herein may be a period of time in the foregoing preset period of time.
**Condition d:** A current position is within a first geo-fence. It should be noted that, it is considered that a probability of a kid getting lost is low at some positions. For example, at school or at home, a probability of a kid getting lost is low. Therefore, at these positions, the second positioning solution may be used to reduce power consumption. Optionally, the first geo-fence may be set by the system by default or set by the user. This is not limited in embodiments of this application. It should be noted that, in an implementation of the condition d, after the positioning function is enabled, the watch first detects a current geographical position by using the first positioning solution (that is, GPS positioning), and if it is determined that the current geographical position enters the first geo-fence (for example, the school), the second positioning solution may be used; or if the current geographical position is not within the first geo-fence, the first positioning solution continues to be used. Optionally, after detecting through the GPS that the watch enters the first geo-fence, the watch may disable the GPS.

It should be noted that, the foregoing four conditions (the condition a to the condition d) are merely examples. In actual application, more or fewer conditions than the foregoing four conditions may be included. This is not limited in embodiments of this application.

Optionally, the second condition may include at least one of the following:
**Condition e:** The current battery level of the watch is sufficient. It should be noted that, in the first positioning solution, GPS positioning needs to be used, and power consumption is high. If the current battery level of the watch is sufficient, the first positioning solution may be used to improve positioning accuracy. The current battery level of the watch being sufficient may include: the current battery level of the watch is greater than a threshold 4. It should be noted herein that, the foregoing threshold 1 and the threshold 4 herein may be the same as or different from the foregoing threshold 1. For example, the threshold 1 and the threshold 4 are the same and both are 20%. When the battery level of the watch is greater than 20%, the first positioning solution is used. When the battery level of the watch is less than or equal to 20%, the second positioning solution is used.
**Condition f:** The current load of the watch is low. It should be noted that, in the first positioning solution, GPS positioning needs to be used, and a geographical position needs to be sent through long-range communication, which causes large power consumption. If the current load of the watch is low, the first positioning solution may be used to improve positioning accuracy. Optionally, the current load of the watch being low may include: the current CPU usage of the watch is low (for example, the current CPU usage is less than a threshold 5), the current storage space usage is low (for example, the current storage space usage is less than a threshold 6), and the like. It should be noted herein that, the threshold 5 herein may be the same as or different from the foregoing threshold 2. The threshold 6 herein may be the same as or different from the foregoing threshold 3.
**Condition g:** Current time is within a second preset period of time. It should be noted that, as mentioned above, when detecting that the current time is in the preset period of time (for example, from 8 a.m. to 8 p.m.), the watch enables the positioning function, where the second preset period of time herein may be a period of time in the foregoing preset period of time. In addition, as mentioned above, when detecting that the current time is in the first preset period of time, the watch uses the second positioning solution, where the second preset period of time herein may be a remaining period of time in the preset period of time other than the first preset period of time.
**Condition h:** The current position is not within the first geo-fence. For the first geo-fence, refer to the foregoing descriptions. It should be noted that, as described above, when the watch is within the first geo-fence (for example, the school), the watch uses the second positioning solution. Therefore, within the first geo-fence, the watch performs positioning with assistance of the surrounding device. For example, the watch may receive the geographical position sent by the surrounding device. If the watch determines, based on the geographical position sent by the surrounding device, that the watch moves out of the first geo-fence, the first positioning solution is switched to.

It should be noted that, the foregoing four conditions (the condition e to the condition h) are merely examples. In actual application, more or fewer conditions than the foregoing four conditions may be included. This is not limited in embodiments of this application.

S602: The watch performs the second positioning solution.

It may be understood that, if the positioning module B is in a disabled state before S602, the positioning module B may be enabled, and then the second positioning solution is performed.

S603: The watch performs the first positioning solution.

It may be understood that, if the positioning module A is in the disabled state before S603, the positioning module A may be enabled, and then the first positioning solution is performed.

In some embodiments, switching may be performed between the first positioning solution and the second positioning solution. The switching manner may include manual switching by the user or automatic switching by the watch. Manual switching is used as an example. For example, in FIG. 7C, the user may manually switch the positioning solution through options of the positioning mode A and the positioning mode B. Automatic switching is used as an example, including the following two cases.

Case 1: The watch currently uses the first positioning solution (GPS positioning). When detecting that a third condition is satisfied, the watch switches from the first positioning solution to the second positioning solution (assisted positioning). For example, the third condition may include at least one of the foregoing condition a, condition b, condition c, condition d, and the following condition i. Condition i: Positioning in the first positioning solution fails (for example, the GPS cannot perform positioning or the geographical position cannot be sent to the cloud due to a poor network signal).

Case 2: The watch currently uses the second positioning solution. When detecting that the fourth condition is satisfied, the watch switches from the second positioning solution to the first positioning solution. For example, the fourth condition may include at least one of the foregoing condition e, condition f, condition g, condition h, and the following condition j. Condition j: Positioning in the second positioning solution fails (for example, when the watch detects that there is no surrounding device, the second positioning solution cannot be used).

In the foregoing embodiment, an example in which the wearable device worn by the kid is the watch is used. It should be noted that, the wearable device may alternatively be a band, a necklace, a hat, a button, clothing, shoes, sunglasses, or the like. This is not limited in embodiments of this application. In addition, the wearable device may be replaced with a non-wearable device, for example, a mobile phone or a personal computer (Personal Computer, PC). The PC may include a device such as a tablet computer, a notebook computer, or a desktop computer; or may be a vehicle-mounted device; or may be a virtual reality (Virtual Reality, VR) device, an augmented reality (Augmented Reality, AR) device, a mixed reality (Mixed Reality, MR) device, or the like. This is not limited in embodiments of this application.

In addition, in the foregoing embodiment, an example in which the parent views the position of the kid through the mobile phone is used. It may be understood that, the mobile phone may be alternatively replaced with another device, for example, may be a PC, or may be a wearable device such as a watch or a band, or may be a vehicle-mounted device, or may be a home appliance. This is not limited in embodiments of this application. In addition, in the foregoing embodiment, the cloud may include a cloud server. A type of the cloud server is not limited in embodiments of this application.

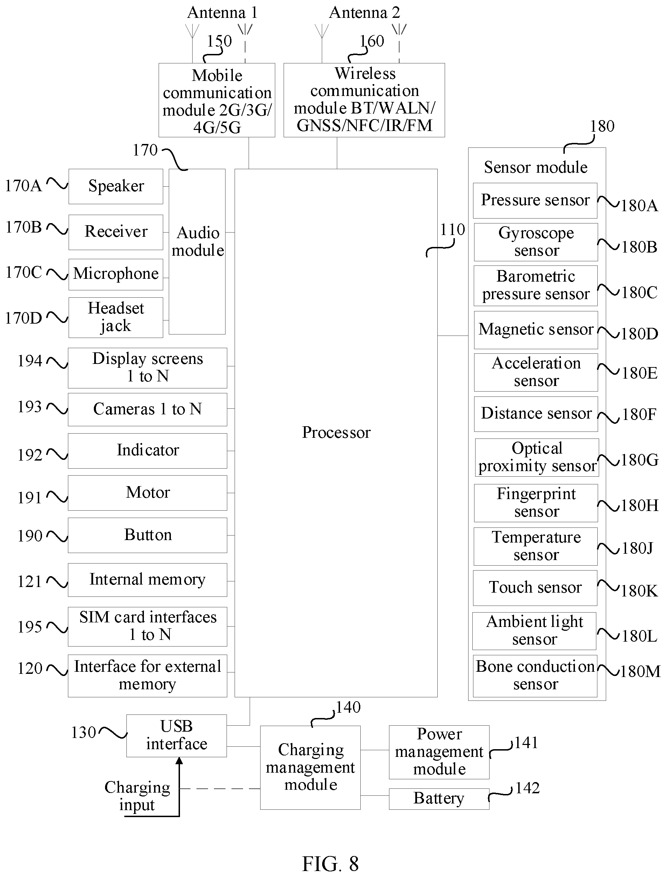

FIG. 8 is a diagram of a structure of an electronic device. The electronic device may be the watch, the mobile phone, or the like described above. As shown in FIG. 8, the electronic device may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may perform the shortcut display method provided in embodiments of this application. For example, the processor 110 may display a first interface through the display screen 194, where the first interface includes N regions, and N is a positive integer. The N regions respectively correspond to N applications in the electronic device. A first region in the N regions includes at least one shortcut of a first application. The first region is any one of the N regions. The first application is an application that is in the N applications and that corresponds to the first region. The at least one shortcut is used to enable at least one function of the first application or display at least one interface of the first application. The shortcut in the first region and a shortcut in another region (a region, other than the first region, in the N regions) are independent of and irrelevant to each other.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display screen 194 through the DSI interface, to implement a display function of the electronic device 100.

The GPIO interface may be configured through software. The GPIO interface may be configured as a control signal or a data signal. In some embodiments, the GPIO interface may be configured to connect the processor 110 to the camera 193, the display screen 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that, an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution to wireless communication applied to the electronic device, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device through a wireless communication technology.

The display screen 194 is configured to display a display interface of an application, and the like. The display screen 194 includes a display panel. In some embodiments, the electronic device may include one or N display screens 194, where N is a positive integer greater than 1.

The electronic device 100 may implement a photographing function through the ISP, the camera 193, the video codec, the GPU, the display screen 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage region and a data storage region. The program storage region may store an operating system, software code of at least one application, and the like. The data storage region may store data (for example, an image or a video) generated in a process of using the electronic device, and the like. In addition, the internal memory 121 may include a high-speed random access memory, or may include a nonvolatile memory, for example, at least one magnetic disk storage device, a flash memory, or a universal flash storage.

The interface for external memory 120 may be configured to connect to an external memory card, such as a micro SD card, to extend a storage capability of the electronic device. The external memory card communicates with the processor 110 through the interface for external memory 120, to implement a data storage function. For example, files such as pictures or videos are stored in the external memory card.

The electronic device may implement audio functions through the audio module 170, the speaker 170A, the receiver 170B, the microphone 170C, the headset jack 170D, the application processor, and the like, for example, music playback and recording.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used in a loudspeaker scenario, for example, listening to music or answering a hands-free call by using one or more speakers 170A.

The receiver 170B, also referred to as an "earpiece", is configured to convert an audio electrical signal into a sound signal, and there may be one or more receivers 170B. When a call is answered or voice information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display screen 194.

The gyroscope sensor 180B may be configured to determine a motion gesture of the electronic device. In some embodiments, angular velocities of the electronic device around the three axes (that is, the x-axis, the y-axis, and the z-axis) may be determined through the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device may detect opening and closing of a flip cover by using the magnetic sensor 180D.

The acceleration sensor 180E may detect accelerations in various directions (usually on three axes) of the electronic device. When the electronic device is static, a magnitude and a direction of gravity may be detected.

The distance sensor 180F is configured to measure a distance. The electronic device may measure a distance through infrared or laser.

The optical proximity sensor 180G may include, for example, a light emitting diode (LED) and an optical detector, for example, a photodiode. The light emitting diode may be an infrared light emitting diode. The electronic device emits infrared light outwards through the light-emitting diode. The electronic device uses the photodiode to detect infrared reflected light from a nearby object. When detecting sufficient reflected light, it may be determined that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display screen 194 based on the sensed ambient light brightness.

The fingerprint sensor 180H is configured to collect a fingerprint.

The temperature sensor 180J is configured to detect a temperature.

The touch sensor 180K is also referred to as a touch panel. The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch-sensitive button. The electronic device may receive button input, and generate button signal input related to user settings and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a battery life change, or may be configured to indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the electronic device.

It may be understood that, components shown in FIG. 8 do not constitute a specific limitation on the electronic device. The electronic device in this embodiment of the present invention may include more or fewer components than those in FIG. 8. In addition, a combination/connection relationship between the components in FIG. 8 may further be adjusted and modified.

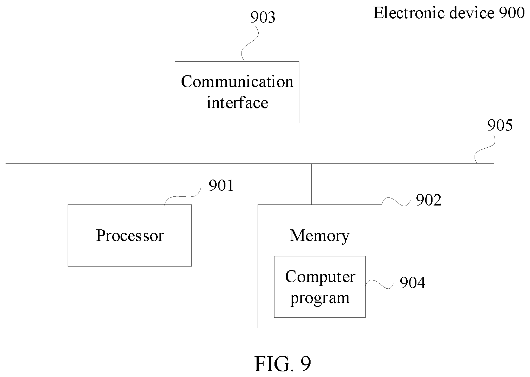

FIG. 9 is a diagram of a structure of an electronic device 900 according to an embodiment of this application. The electronic device 900 may be the foregoing kids' watch, the mobile phone of the parent, the surrounding device, or the cloud. As shown in FIG. 9, the electronic device 900 may include one or more processors 901, one or more memories 902, a communication interface 903, and one or more computer programs 904. The foregoing components may be connected through one or more communication buses 905. The one or more computer programs 904 are stored in the memory 902 and are configured to be executed by the one or more processors 901, and the one or more computer programs 904 include instructions. For example, when the electronic device 900 is the foregoing kids' watch, the instructions may be used to perform related steps of the kids' watch in the foregoing corresponding embodiment, for example, perform related steps of the kids' watch in FIG. 2B. For another example, when the electronic device 900 is the foregoing surrounding device, the instructions may be used to perform related steps of the surrounding device in the foregoing corresponding embodiment, for example, perform related steps of the surrounding device in FIG. 2B. For another example, when the electronic device 900 is the foregoing cloud, the instructions may be used to perform related steps of the cloud in the foregoing corresponding embodiment, for example, perform related steps of the cloud in FIG. 2B. For another example, when the electronic device 900 is the foregoing mobile phone of the parent, the instructions may be used to perform related steps of the mobile phone of the parent in the foregoing corresponding embodiment, for example, perform related steps of the mobile phone of the parent in FIG. 2B. The communication interface 903 is configured to implement communication between the electronic device 900 and another device. For example, the communication interface may be a transceiver.

In the foregoing embodiments provided in this application, the method provided in embodiments of this application is described from a perspective of the electronic device (for example, the mobile phone, the watch, or the like) used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like. In a case in which no conflict occurs, the solutions in the foregoing embodiments may be combined for use.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A positioning method, applied to a first device, wherein the first device comprises a short-range communication module, and the method comprises:
determining whether the first device satisfies a first condition, wherein the first condition comprises at least one of the following: a current battery level is less than a first preset battery level, a current load is greater than a first preset load, current time is within a first preset period of time, and it is detected, through a positioning system in the first device, that the first device enters a first geo-fence; and
switching, if it is determined that the first device satisfies the first condition, a positioning mode of the first device from a first mode to a second mode, wherein the first mode is positioning through the positioning system, and the second mode is positioning through the short-range communication module.

2. The method according to claim 1, wherein the positioning through the short-range communication module comprises:
sending a positioning request to a surrounding device through the short-range communication module, wherein the positioning request is used to trigger the surrounding device to report a geographical position to a cloud, and the positioning request comprises a device identifier of the first device.

3. The method according to claim 1, wherein the positioning through the short-range communication module comprises:
sending a positioning request to a surrounding device through the short-range communication module, wherein the positioning request is used to trigger the surrounding device to send a geographical position to the first device; and
sending a second geographical position to a cloud based on a first geographical position sent by the surrounding device.

4. The method according to claim 3, wherein
the first geographical position is the same as the second geographical position, and is a geographical position of the first device; or
the first geographical position is a geographical position of the surrounding device, and the second geographical position is a geographical position of the first device that is obtained through calculation based on the first geographical position.

5. The method according to any one of claims 1 to 4, wherein after it is detected, through the positioning system, that the first device enters the first geo-fence, the method further comprises: disabling the positioning system.

6. The method according to any one of claims 1 to 5, wherein the method further comprises:
switching, when it is determined that the first device satisfies a second condition, the positioning mode from the second mode to the first mode, wherein the second condition comprises at least one of the following:
the current battery level is greater than or equal to the first preset battery level;
the current load is less than or equal to the first preset load;
the current time is not within the first preset period of time; or
it is determined, through the second mode, that the first device moves out of the first geo-fence.

7. The method according to any one of claims 1 to 6, wherein the method further comprises:
enabling a positioning function when it is determined that the first device satisfies a third condition, wherein the third condition comprises at least one of the following:
a guardian device of the first device is not contacted for more than first preset duration;
the first device is not used for more than second preset duration; or
the current time is within a second preset period of time.

8. The method according to claim 2, wherein the method further comprises:
receiving, through the short-range communication module, reminder information sent by the surrounding device, wherein the reminder information comes from the cloud or a guardian device of the first device.

9. The method according to claim 2 or 3, wherein before the sending the positioning request to the surrounding device through the short-range communication module, the method further comprises:
determining, when it is determined that a plurality of surrounding devices exist, a target device in the plurality of surrounding devices based on device distances and/or device types of the surrounding device; and
the sending the positioning request to the surrounding device through the short-range communication module comprises:
sending a positioning request to the target device through the short-range communication module.

10. The method according to claim 2 or 3, wherein before the sending the positioning request to the surrounding device through the short-range communication module, the method further comprises:
outputting prompt information when it is determined that no surrounding device exists, wherein the prompt information is used to prompt the first device to move.

11. The method according to any one of claims 1 to 10, wherein
the positioning system comprises a global positioning system GPS or a global navigation satellite system GNSS; and
the short-range communication module comprises Bluetooth, Bluetooth low energy BLE, near field communication NFC, or ultra-wideband UWB.

12. A positioning method, applied to a second device, wherein the second device is a guardian device of a first device, and the method comprises:
receiving a geographical position of the first device that is sent by a cloud;
displaying the geographical position of the first device;
displaying a first shortcut, wherein the first shortcut is used for contacting the first device through a surrounding device of the first device;
receiving an operation for the first shortcut; and
sending first information to the cloud, wherein the first information is used to trigger the cloud to send reminder information to the first device through the surrounding device.

13. The method according to claim 12, wherein the method further comprises:
displaying N shortcuts, wherein the N shortcuts comprise at least one of the following:
a second shortcut for contacting the first device via a phone call;
a third shortcut for contacting the first device via an SMS message;
a fourth shortcut for contacting the first device via a voice call; or
a fifth shortcut for contacting the first device via a video call.

14. The method according to claim 13, wherein a quantity and/or display statuses of the N shortcuts change with a current state of the first device.

15. A positioning method, applied to a third device, wherein the third device comprises a short-range communication module, and the method comprises:
receiving, through the short-range communication module, a positioning request sent by a first device, wherein the first device is a surrounding device of the third device, and the positioning request is used to trigger the third device to report a geographical position to a cloud;
sending a geographical position to the cloud;
receiving a first message sent by the cloud, wherein the first message is used to trigger the third device to send reminder information to the first device; and
sending a reminder message to the first device.

16. A positioning method, applied to a cloud, wherein the method comprises:
receiving a geographical position of a first device from a third device;
sending the geographical position to a guardian device of the first device;
receiving a first message sent by the guardian device, wherein the first message is used to trigger the cloud to send reminder information to the first device through the third device; and
sending a second message to the third device based on the first message, wherein the second message is used to trigger the third device to send a reminder message to the first device.

17. An electronic device, comprising:
a processor, a memory, and one or more programs, wherein
the one or more programs are stored in the memory, the one or more programs comprise instructions, and when the instructions are executed by the processor, the electronic device is enabled to perform steps of the method according to any one of claims 1 to 16.

18. A communication system, comprising a first device, a second device, a third device, and a cloud, wherein
the first device is configured to perform steps of the method according to any one of claims 1 to 11;
the second device is configured to perform steps of the method according to any one of claims 12 to 14;
the third device is configured to perform steps of the method according to claim 15; and
the cloud is configured to perform steps of the method according to claim 16.

19. A computer-readable storage medium, wherein the computer-readable storage medium is configured to store a computer program, and when the computer program is run on a computer, the computer is enabled to perform the method according to any one of claims 1 to 16.
